# EUROPEAN PATENT APPLICATION

(11) **EP 1 658 766 A2**
(43) Date of publication of application: **24.05.2006**
(21) Application number: 05111069.0
(22) Date of filing: 22.11.2005
(51) Int. Cl.: A01D 46/28

(54) **Grape collection machine**

(30) Priority: 22.11.2004 EP 04380232
(71) Applicant: Ramero, Luis Alberto, Rivadavia, Mendoza (AR)
(72) Inventor: Ramero, Luis Alberto, Rivadavia, Mendoza (AR)
(74) Representative: Robba, Pierpaolo

(57) **Abstract**

The machine comprises a flow control valve (1) with hydraulic fluid conduits (2,3); the fluid may be supplied by the vineyard tractor circuit, and conduits are connected to the hydraulic engine control element (4), to which a second hydraulic engine control is added for the operation of a conveyor belt (15) located inside a frame (W).

Said hydraulic engine (5) is coupled to a connecting rod-crank mechanism (6) mechanically associated to a motor lever (7) intended to drive the guides (8) of the sliding vibrating clamps (9), and this is achieved by means of a kinematic chain integrated by rods (10). A pair of friction rings (16) has been intercalated in the motor lever (7) in order to avoid lateral displacement thereof.

The connecting rod-crank mechanism (6) comprises the disk shaped crank (17), which is perforated to regulate the positioning of the trunnion (20) provided by the connecting rod (19), which operates the motor lever (7) and the guides (8) of the sliding vibrating clamps (9).

## Description

The present invention relates to vintage tasks in general, and more particularly, it refers to a grape collection machine.

It is well known that vineyard plantations can follow different layouts tending to obtain a better grapevine distribution in order to optimize cluster growth and facilitate the harvest. Among these layouts, there is one known as grapevine in canopy with a hanging pattern, which identifies the structure given to each plant in the vineyard, and which is arranged so as to lay out branches with a "T" configuration from the main vertical grapevine trunk, wherefrom only two opposing branches come out and define the arrangement. Both branches are vertically driven downwards, wherefrom cordons or strands will develop, generating vertically-oriented, longitudinally-aligned foliage and grape clusters in each frame, parallel to the trunks and to the posts conforming the canopy base structure.

The main object of the present invention is a simple machine capable of mechanizing grape harvest in a highly efficient and cost effective way.

Another object of the invention consists of obtaining a machine, specially constructed to perform grape harvest, which may be a self-propelled machine or one easily mounted on a vineyard tractor, using its controls and its own hydraulic fluid, thus achieving important savings with respect to expensive traditional equipment and, consequently, reducing labor costs.

Therefore, the object of the present invention is the creation of a machine that facilitates a quick and efficient grape collection in plantations of the hanging canopy type, which provide an aligned layout of clusters within reach of the machine elements, which in turn may easily detach grapes and clusters without any damage thereto.

The above mentioned hanging canopy plantation procedure allows for the lengthwise location of vine shoots, on both sides of the ridge extending lengthwise thereof, conforming an equal number of cordons from which clusters hang. As it will be described hereunder, the harvesting machine comprises an assembly of vibrating clamps, capable of grasping each cordon and moving it transversally, customizing the frequency to each grape variety; so that grains as well as clusters come off their cordon and can be collected by collecting hoppers, which place the fruit on to conveyor belts, which will deposit grapes in a nearby trailer driven by a tractor or by the harvester itself, should the machine be self-propelled.

The vibrating assembly is a connecting rod-crank mechanism that moves the motor lever, which, in turn, drives the guides on which the clamps are mounted. The connecting rod-crank mechanism is provided with means that allow for regulation of the connecting rod stroke, thus modifying the nature of the vibration applied, which is very important in order to adapt the collection machine to the different grape varieties. The whole vibrating device is driven by a hydraulic engine, operated by means of a hydraulic pump.

Based on the above, the equipment simplicity and low cost can be inferred, as the unit of the invention can be either self-propelled or it can be simply mounted on, or removed from, the tractor, whenever required.

### PRIOR ART:

In the prior art, several embodiments with the object or the present invention have been developed; among them we can mention the following:

Argentine Patent Application No. 010103351, filed by this applicant, refers to a "Method for grapevine canopy management using a divided hanging pattern, with vertical orientation of foliage, and installation for the actual construction thereof". The content of said application is interesting because it establishes the field of application of the present embodiment, since it defines in detail the elements of same as well as their arrangement, intended to attain a vineyard that uses the hanging type canopy structure, so that harvest is accomplished using the machine of the present invention.

Patent CA No. 1205293 refers to a "Grain management arrangement for an articulated combined machine", wherein the main axle device connects the front part of the rear bogie to the back part of it, and it consists of special separate upper and lower links. The lower link provides oscillation between the bogies and at the same time it establishes a guide pivoting center. The upper link normally rests on an antero-posterior plane, and is connected on a pivoting basis between the upper and lower portions of their respective bogies, thus extending the length of the rear bogie. The main axle layout also provides part of a conveyor structure that carries the clean grain between the front and rear bogies. In one embodiment, the upper link comprises a channeled tube inside of which the clean grain is introduced by means of a lift. In another embodiment, the lower link layout serves the dual purpose of the tube above mentioned and of a conveyor housing. This layout is part of an articulated combined machine, and its structure comprises grain conveyor means linked between the bogies that are part of the machine.

These teachings do not interfere with the object of the present invention.

Patent CA 2096917 refers to a "Blueberry collection machine". It comprises a plurality of tilted channels supported with continuous movement from their lower ends, near the soil, across a field of wild blueberry bushes. Channels are provided on a side-by-side arrangement, adjacent to one another, so as to form spaced sharp belts that will strip off fruits from their bushes. A nozzle that directs forced air inside the channels, close to ground level, is included. It is an embodiment of the prior art that adopts a different structure since it must operate practically at ground level. This patent does not interfere with the present machine, object of this specification.

Other mechanical harvesters broadly different in construction, the applications of which are intended for different plant species, and which do not interfere with the machine of this embodiment, are known in the art.

Hence, in order to achieve the advantages of the present invention, the device, which is a machine used in grape harvest, is identified because it comprises a hydraulic engine coupled to an adjustable connecting rod -crank mechanism that drives a motor lever of a couple of bars, on which a pair of sliding vibrating clamps are mounted; wherein said motor lever is mounted on recordable position supporting rods, the assembly thereof is articulated on another pair of supporting bars mounted on the device chassis, which is mounted on at least one side of the tractor. Said hydraulic engine may be driven by the tractor's hydraulic pump, wherein the hydraulic engine circuit includes a control valve and a flow control valve. It may also be configured as a self-propelled unit.

In order to allow for a better understanding of the present invention, which refers to a grape collection machine applicable to grapevine canopy management with a hanging pattern, with vertical orientation of foliage, and so that it may be easily carried out, a detailed description of a preferred embodiment is provided in the following paragraphs. In said detailed description reference is made to the accompanying illustrative drawings; all provided on an exemplary basis and which should be interpreted in an illustrative and not in a limiting sense of the invention, the components of which may be selected among several equivalents thereof without departing from the principles of the invention.

### DRAWINGS

Figure 1 illustrates a schematic plan view of the machine layout, which constitutes the object of the present invention, said machine is mounted on a vineyard tractor.
Figure 2 illustrates a front view of the scheme shown in Fig. 1, with the machine operating in a canopy vineyard.
Figure 3 shows a representative construction of the machine described above, in a top plan view.
Figure 4 is a side view of the mechanism illustrated in Fig. 3. The hopper front wall has been partially removed in order to show the mechanical layout.
Figure 5 is a corresponding front view.
Figure 6 is an expanded detailed view of the connecting rod -crank system, shown in a top plan view.
Figure 7 and 8 illustrate corresponding front and side views of the system illustrated in Fig. 6.

### REFERENCES

On the figures described above, corresponding reference characters indicate corresponding or equal parts.

### DESCRIPTION

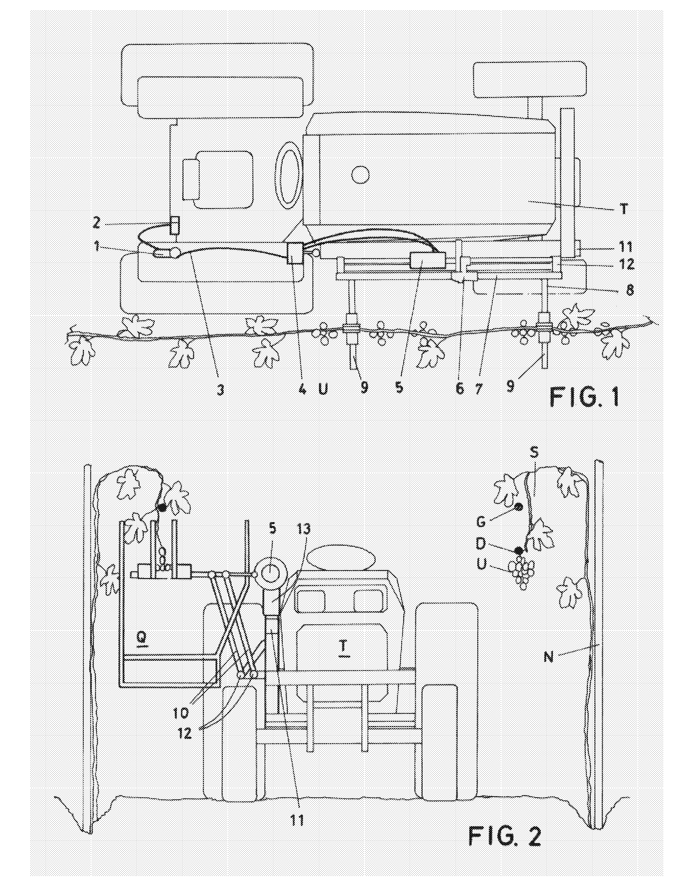

According to accompanying schematic Figures 1 and 2, the invention is applied to a "T" vineyard tractor, and, in this case, it essentially comprises the following elements: one flow control valve 1 connected by tubing 2 to the tractor hydraulic circuit, and by tubing 3 to the control means 4 of a hydraulic drive engine 5 of a connecting rod-crank mechanism 6. Number 7 represents the motor lever of the transversal guides 8 of the vibrating clamp 9, and 10 represents the extensible supporting rods articulated, on one end thereof, with said transversal guides, and on the other end, connected to the chassis 11, by means of lengthwise supporting rods 12, wherein they articulate.

Figures 1 and 2 show props N, guide wire G and grape clusters U.

Figure 2 illustrates, besides the aforesaid elements, the engine support 13, the management wires D, the hanging type canopy S and the hopper Q.

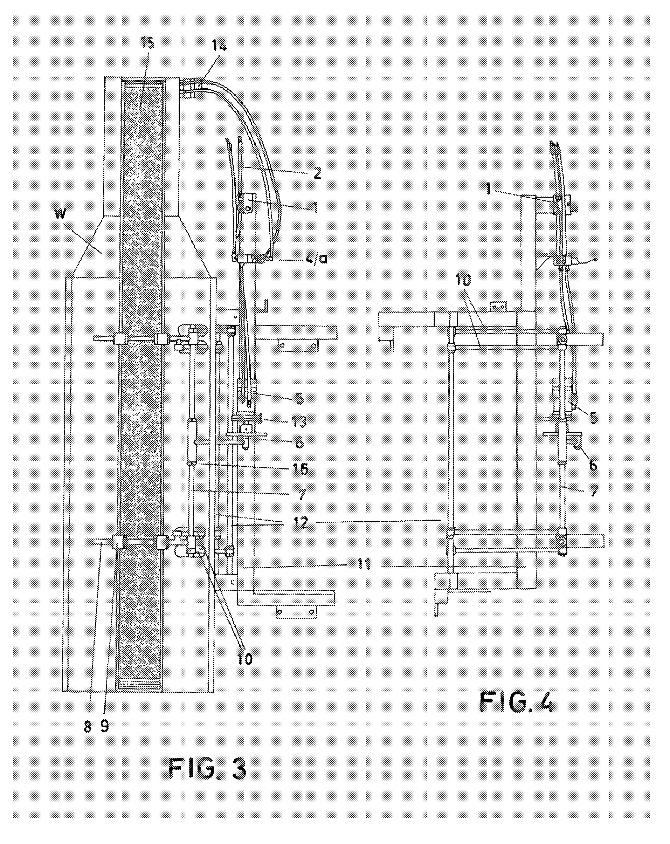

Figures 3, 4 and 5 illustrate one of the possible embodiments of the machine, in which the side hopper has been replaced with a conveyor belt.

The same as described above, number 1 represents the flow control valve with its hydraulic fluid conduits 2 from tractor "T" circuit, said conduits are provided with the corresponding connections in the ends. They reach the control element 4a of the hydraulic engine 5, with its support 13, control element to which the control of the hydraulic engine 14 that drives the conveyor belt 15, has been added, with the corresponding fluid feed tubing.

Figure 1 shows the conveyor belt's frame W, with the bottom portion thereof tilted on both sides and converging on the belt plane, thus forming a kind of fruit guiding hopper.

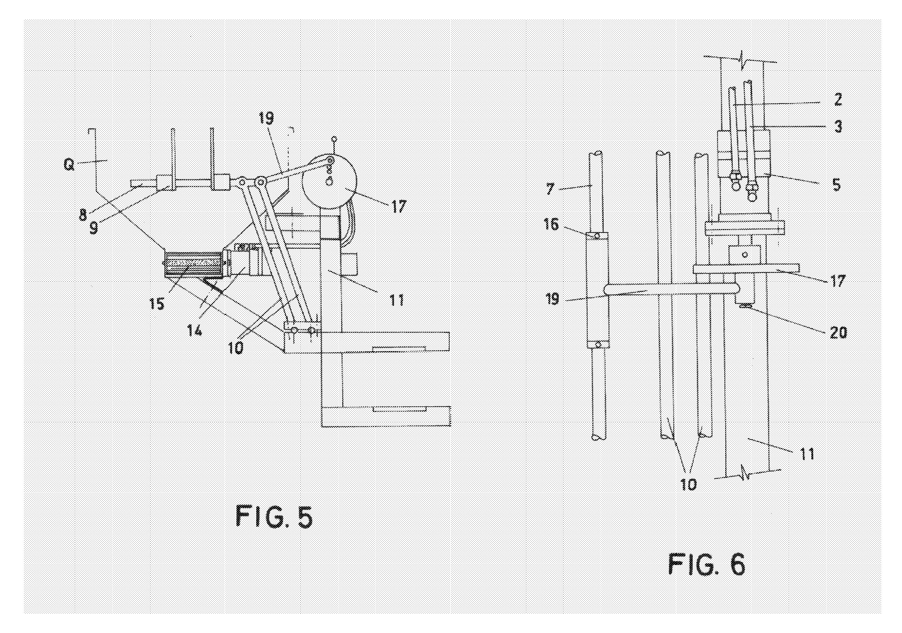

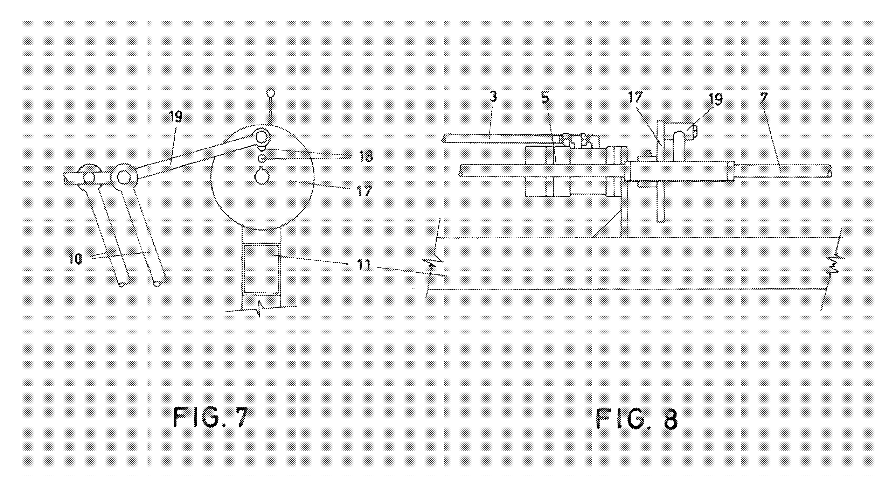

Connected to engine 5 is a connecting rod-crank mechanism 6, mechanically connected to the motor lever 7, for the purpose of operating guides 8 of at least a pair of vibrating sliding clamps 9. The presence of extensible supporting rods 10 is also shown. Friction rings 16 have been inserted in the motor lever 7 in order to prevent the lateral displacement thereof. The connecting rod -crank mechanism in Figures 6, 7 and 8 is illustrated pursuant to three orthogonal planes, wherein a detailed layout thereof is shown. It consists of tubes 3 which feed the hydraulic engine 5, and, which is provided with a support 13 for the chassis 11.

The hydraulic engine is directly coupled to the disk 17 which works as a crank, said disk is provided with a series of radially spaced perforations 18, intended to fix the trunnion integrating the connecting rod 19. Number 20 corresponds to the connecting rod trunnion tie bolt 19.

### OPERATION:

Upon establishing the different components of this version of the invention, developed in order to explain the nature thereof, the description will now be supplemented with the functional and operative relationship existing between its parts and the result obtained therefrom.

According to the type of grape to be harvested, the connecting rod trunnion 19 is fixed into the most convenient orifice 18, for the purpose of providing said clusters with an optimum vibration frequency. Next, the machine clamp assemblies are located at a height defined by the management wires D and guide wires G, for the purpose of subjecting each cluster's stalk to the vibrating action. Therefore, adjustment is provided for the extensible supporting rods 10, articulated over the longitudinal supporting rods 12, which are supported on the chassis 11. The vibrating movement imposed by the connecting rod-crank mechanism is transmitted to each pair of sliding clamps 9, by means of motor levers 7, driven by connecting rods 19.

The vibrating effect cuts off rachis or twigs integrating each cluster, or detaches the grapes, all of which is collected by the conveyor belt 15 and unloaded in the trailer (not illustrated). Since the frame "W" converges towards the belt, it guides the fruit coming off towards said belt.

The control of the hydraulic engine that drives the connecting rod-crank mechanism has been explained by means of the elements already described, as well as the operation of the conveyor belt. For that purpose, conduit connectors 2 are secured to hydraulic circuit of tractor T, so that the machine may be in a condition to operate. Moreover, the explanation has been provided in two application versions, attachable to a vineyard tractor for cost saving purposes, since the tractor is a device commonly used in agrarian exploitations. Nothing prevents the present machine from being a self-propelled machine by adding appropriate and simple devices. Likewise, the figures show two sets of vibrating clamps customized to the vineyard tractor size, which on the other hand is regarded as optimum. However, this detail will depend on the dimensions and the type of construction of the machine.

In brief, the machine described above consists of a chassis which provides support to the hydraulic engine, which, in turn, is provided with control means and coupled to an adjustable connecting rod-crank drive mechanism by means of a kinematic chain integrated by several rods, such that a pair of sliding vibrating clamps is mounted on at least one of said transversally disposed rods, said vibrating clamps being driven by a motor lever connected to the crank and articulated on recordable length supporting rods, which are mechanically related to another pair of longitudinal supporting rods connected to the aforementioned device chassis. Collection means for the fruit are in place in correspondence with such sliding vibrating clamps.

## Claims

1. A grape collection machine, of the type applied to a grapevine managed on a hanging canopy with vertical orientation of foliage, comprising: a hydraulic engine supporting chassis, provided with control means and attached to an adjustable connecting rod-crank drive mechanism by means of a kinematic chain, with a crank which is connected to a motor lever that drives at least one transversal rod on which a pair of respective sliding vibrating clamps are mounted; the motor lever thereof is articulated on the ends to an equal number of recordable length supporting rods, which, in turn, are articulated on another pair of lengthwise supporting rods connected to the aforesaid device chassis; collection means to pick the fruit are placed in correspondence with such sliding vibrating clamps.

2. A grape collection machine, according to claim 1, wherein the drive means of said hydraulic engine connected with a tractor's hydraulic pump circuit, comprise a control valve and a flow control valve; the flow control valve provided with hydraulic fluid conduits on the ends thereof and the corresponding connections to the aforesaid tractor's related circuit.

3. A grape collection machine, as claimed in claim 1, wherein said connecting rod-crank mechanism directly attached to the hydraulic engine comprises the crank integrated by means of a disk bearing a series of radially spaced apart perforations, in one of which the trunnion conformed on the crank end is motionlessly fastened by means of a bolt.

4. A grape collection machine, as claimed in claim 1, wherein said kinematic chain integrated by the driving rods of the aforesaid vibrating clamps, comprises a motor lever articulated with the crank, wherein at least a pair of extensible rods are articulated, these rods are in turn articulated on one end with a pair of longitudinal supporting bars mounted on the chassis, and said rods are associated to the transversal guide rods of each pair of vibrating clamps that contact the clusters to be removed.

5. A grape collection machine, as claimed in claim 1, wherein collection means for the fruit are located in correspondence and below said sliding vibrating clamps, said means comprising a conveyor belt, driven by a hydraulic engine provided with control means included in the hydraulic circuit and coupled to the machine control means.

6. A grape collection machine, as claimed in claim 5, wherein said conveyor belt is mounted within a tilted bottom frame converging on the conveyor belt plane in the form of a hopper.

7. A grape collection machine, as claimed in claim 5, wherein said collection means of detached fruit, which are located below the sliding vibrating clamps, consist of a hopper.

8. A grape collection machine, as claimed in claim 1, wherein said motor lever that is articulated with the connecting rod, is provided with an equal number of guide friction rings on each side of the articulation with the aforesaid drive connecting rod.
